(19) Europäisches Patentamt

European Patent Office

Office européen des brevets

(11) Veröffentlichungsnummer: **0 249 084**
**B1**

(12) **EUROPÄISCHE PATENTSCHRIFT**

(45) Veröffentlichungstag der Patentschrift:
17.01.90

(21) Anmeldenummer: 87107637.8

(22) Anmeldetag: 26.05.87

(51) Int. Cl.⁴: **B65G 15/16**

---

(54) **Doppelgurtbandförderer.**

---

(30) Priorität: 07.06.86 DE 3619246

(43) Veröffentlichungstag der Anmeldung:
16.12.87 Patentblatt 87/51

(45) Bekanntmachung des Hinweises auf die Patenterteilung:
17.01.90 Patentblatt 90/3

(84) Benannte Vertragsstaaten:
AT BE CH DE ES FR GB GR IT LI LU NL SE

(56) Entgegenhaltungen:
EP-A- 0 009 764
DE-A- 3 432 553
DE-A- 3 440 150
DE-B- 1 012 865
DE-B- 1 140 506
DE-C- 948 857
US-A- 3 910 405

(73) Patentinhaber: Friedrich Wilh. Schwing GmbH,
Postfach 247 Heerstrasse 9-27, D-4690 Herne 2(DE)

(72) Erfinder: Schwing, Friedrich Wilhelm, Dorstener
Strasse 424, D-4690 Herne 2(DE)
Erfinder: Schwing, Gerhard, Holbeinstrasse 3,
D-4690 Herne 2(DE)

(74) Vertreter: Herrmann-Trentepohl, Werner, Dipl.-Ing. et al,
Schaeferstrasse 18, D-4690 Herne 1(DE)

## Beschreibung

Die Erfindung betrifft einen Doppelgurtbandförderer gemäß dem Oberbegriff des Patentanspruches 1.

Der erfindungsgemäße Doppelgurtbandförderer dient zur Überwindung geneigter, vorzugsweise senkrechter Förderwege, deren Winkel daher den Rutschwinkel eines rolligen Fördergutes auf dem Förderbandgurt übersteigt bzw. flüssiges oder schlammiges Fördergut, z.B. Mörtel oder Beton auf der Steilstrecke zum Abfließen bringen würde. Das Deckband wirkt mit dem fördernden Trum des Fördergurtes in der Weise zusammen, daß durch die Ausbeulung des Deckbandgurtes zwischen den einander deckenden Trumen von den Gurten nach außen abgeschlossene Förderräume gebildet werden, die das Fördergut einschließen, so daß die Förderwirkung zustandekommt. Hierbei wird durch das Aufeinanderpressen der Gurtränder und durch den Zusammenhalt der Gurtlängskanten gewährleistet, daß die Förderräume abgedichtet bleiben, so daß nennenswerte Teile des Fördergutes nicht nach außen dringen können. Ist entsprechend der vorzugsweisen Ausführungsform der Erfindung eine Zug- und Querbewehrung des Deckbandgurtes vorgesehen, so ergeben sich nach außen und untereinander abgedichtete Förderräume, welche sogar weitgehend wasserdicht sind.

Die Ausbildung der Förderräume durch Ausbeulen des Deckbandgurtes hat den Vorteil, daß zur Führung und gegebenenfalls Unterstützung des Förderbandgurtes gerade Bandtrag- bzw. Bandumlenkrollen vorgesehen werden können, weil sich die ausgebeulten Bereiche des Gurtes je nach Auflagenseite z.B. auch in umgekehrter Richtung einbeulen lassen. Solche geraden Bandtrag- bzw. Umlenkrollen lassen sich daher allerdings mindestens mit Ausnahme der unteren Kehre einsetzen, die sich an die Bandaufgabe anschließt. Dort wird meistens eine gemuldete Bandumlenkrolle erforderlich, welche die Ausbeulungen aufnimmt und die miteinander zusammenwirkenden Gurttrume in die Senkrechte umlenkt. Bandtragrollen werden dagegen an der oberen Kehre des Förderbandes zur Umlenkung der Gurte in die Horizontale benutzt, wo sich die Gurte voneinander trennen, so daß dort auf die Ausbeulungen keine Rücksicht genommen zu werden braucht. Verläuft die Steilstrecke wie im Regelfall vorgesehen im wesentlichen senkrecht, so bedürfen die Gurte im allgemeinen keiner oder nur einer geringen Abstützung, jedoch muß dafür gesorgt sein, daß der beschriebene Zusammenhalt der Gurte gewährleistet ist.

Doppelgurtbandförderer der erfindungsgemäßen Art können Becherwerke ersetzen und verbessern deren Förderung erheblich, weil sie mit weniger Einzelteilen auskommen, einen wesentlich geringeren Ersatzteilbedarf haben und gleichmäßiger fördern. Die erfindungsgemäßen Doppelgurtbandförderer haben darüberhinaus den Vorteil, daß sie mit im wesentlichen glatten Bandoberflächen arbeiten und dennoch nicht auf die Brückenbildung des Fördergutes zur Ausbildung der Förderräume angewiesen sind.

Die Erfindung setzt einen derartigen Doppelgurtbandförderer als bekannt voraus (DE-OS 34 32 553). Hierbei dienen auf der Steilstrecke stationäre Führungsleisten mit U-förmigem Profil dazu, die Gurtränder aufeinanderzupressen und die Gurtkanten zusammenzuhalten. Diese Führungsleisten sind gerade und setzen daher voraus, daß die einlaufenden Gurte bereits mit ihren Längskanten aufeinanderliegen. Deswegen muß durch eine entsprechende Bandvorspannung den Trennkräften der Gurte vor dem Einlauf in die Führungsleisten entgegengewirkt werden. In den Führungsleisten werden die Gurtlängskanten nicht nur aufeinandergehalten, sondern auch in Förderrichtung bewegt. Das setzt einen entsprechenden Bewegungsspielraum voraus, welcher wegen des geforderten Zusammenhaltes nicht zu groß, andererseits aber auch nicht zu eng gewählt werden darf, weil damit die Reibungskräfte der Gurtlängskanten in der Führung ansteigen, welche von den Gurten überwunden werden müssen.

Hierauf beruhen die Nachteile des bekannten Doppelgurtbandförderers. Einerseits nämlich ist der Energiebedarf an den Bandantrieben entsprechend hoch, und der Verschleiß der Bandlängskanten ist nach kurzer Betriebszeit bereits merklich, so daß die Gurte häufig ausgetauscht werden müssen. Andererseits aber sind die Förderräume nicht zuverlässig abgedichtet. Das führt zwischen den Förderräumen zu Energieverlusten durch Teile des Fördergutes, welche sich entgegen der Förderrichtung bewegen und an den Bandkanten zu Verschmutzungen durch ausgetretenes Fördergut, welche die Führung verschlechtern, so daß schließlich die Gurte auf der Steilstrecke zu entgleisen drohen.

Der Erfindung liegt die Aufgabe zugrunde, die Antriebe des als bekannt vorausgesetzten Doppelgurtbandförderers und dessen Gurte zu entlasten sowie Betriebsstörungen weitgehend zu verhindern.

Gemäß der Erfindung wird diese Aufgabe mit den Merkmalen des Patentanspruches 1 gelöst. Zweckmässige Ausführungsformen der Erfindung sind Gegenstand der Unteransprüche.

Gemäß der Erfindung ersetzen die an den Deckbandkanten nach außen vorstehenden Haken die Führungs leisten, wodurch das Aufeinanderpressen der Gurtränder und der Zusammenhalt der Gurtlängskanten durch den gegenseitigen Zusammenhalt der Gurte unter Verzicht auf eine Stationäre Führung gewährleistet wird. Dadurch entfallen die bisherigen Reibungsverluste. Das Ein- und Ausspuren der Fördergurtkanten in diese das Aufeinanderpressen und Zusammenhalten gewährleistenden Vorrichtungen geschieht erfindungsgemäß durch Ausnutzung der elastischen Formänderung des Förderbandgurtes, den dieser auf seinem Weg von der Bandumkehre in die Steilstrecke und aus dieser bis zum Abwurf erfährt. Diese Formänderungen treten im Anschluß an die Muldenrollensätze ein, weil sich dann der Gurt aus dem Muldenbogen einstellt und sich dabei zunehmend abflacht. Das führt erfindungsgemäß dazu, daß die Fördergurtkanten zunächst den Hakenöffnungen genähert werden und schließlich die Gurtlängskanten sich in die Haken einspuren. Dann ist ein kraftschlüssiger Zusammenhalt der Gurtkanten gewährleistet, welcher genügend große Gegenkräfte für die auseinanderstrebenden Gurte erzeugt und die Förderräume dicht hält.

Das geschieht ohne nennenswerten reibenden Verschleiß, gewährleistet aber eine hinreichende Abdichtung, so daß Energieverluste und Betriebsstörungen weitgehend verhindert werden. Tritt am Ende der Steilstrecke eine erneute Muldung des Fördergurtes ein, so werden dessen Längskanten aus dem Eingriff mit den Haken durch die auf der Krümmung des Gurtes auf den Muldenrollensätzen beruhende Querkonstruktion ausgespurt, wobei auch erhebliche Reibungskräfte der Gurtlängskanten an den Haken überwunden werden können, so daß ein ordnungsgemäßer Bandlauf gesichert ist.

Vorzugsweise wird mit der Ausführungsform nach dem Patentanspruch 2 ein ununterbrochener Zusammenhalt gewährleistet, indem die Haken zu einer Leiste zusammengefaßt werden. Dies läßt sich verhältnismäßig einfach bei der Produktion der Gurte verwirklichen, indem man die Kanten des Gurtrohlings entsprechend dauerhaft verformt oder die Leisten aufvulkanisiert werden. Das Leistenprofil ist winkelförmig, wodurch mit dem senkrechten Schenkel den senkrechten Abmessungen der Gurtlängskanten Rechnung getragen werden kann, während der parallel zum flachen Gurt verlaufende Schenkel eine hinreichende Breite erhält, um den Gurt auf einer ausreichenden Fläche zu unterstützen.

Die Biegesteifigkeit der Haken bzw. der sie vereinigenden Leisten sollte ausreichend groß sein, um elastische Verformungen der Haken zu vermeiden, die die erfaßten Gurtlängskanten freigeben könnte. Das gewährleisten die Merkmale des Patentanspruches 3, weil hierbei die Haken bewehrt sind. Dazu dienen verlängerte Querarmierungen, was die Gesamtausbildung vereinfacht.

Das Ein- und Ausspuren der Gurtlängskanten in die Hakenöffnungen sollte möglichst ruckfrei erfolgen. Dazu dient die Ausführungsform nach dem Patentanspruch 4, bei der die Abschrägungen der Hakenschenkel und der mit ihnen zusammenwirkenden abgeschrägten Fördergurtkanten miteinander derart zusammenwirken, daß sich beim Einspuren Leitflächen ergeben, welche das Aufeinanderpressen der Gurtränder mit zunehmender Kraft ermöglichen.

Mit den Merkmalen des Patentanspruches 5 wird für das beschriebene Einspuren der Gurtlängskanten in die Hakenöffnungen eine besondere Bandunterstützung vorgesehen. Diesen steuert die beschriebene Verformung des Förderbandgurtes, so daß sich der Gurt wie gewünscht verformt und einspurt. Andererseits sorgen die Spurkränze und die Nuten für eine Ausrichtung der Gurte und für eine sichere Auflage der zusammengeführten Gurte.

Die Einzelheiten, weitere Merkmale und andere Vorteile der Erfindung ergeben sich aus der nachfolgenden Beschreibung einer Ausführungsform anhand der Figuren in der Zeichnung; es zeigen

Figur 1 schematisch eine Doppelgurtbandförderanlage gemäß der Erfindung in Seitenansicht,
Figur 2 einen Schnitt längs der Linie II-II der Figur 1,
Figur 3 einen Schnitt längs der Linie III-III der Figur 1
Figur 4 einen Schnitt längs der Linie IV-IV der Figur 1,
Figur 5 einen Schnitt der Linie V-V der Figur 1,
Figur 6 schematisch und in abgebrochener Darstellung die linke Bandlängskante im Eingriff mit der Hakenleiste des Deckbandgurtes, wobei die Zeichnung einen Querschnitt zeigt,
Figur 7 in der Figur 6 entsprechender Darstellung eine abgeänderte Ausführungsform der Erfindung und
Figur 8 die Darstellung einer Bandtragrolle und der Abflachung des Förderbandgurtes bei einer abgeänderten Ausführungsform der Anlage nach Figur 1.

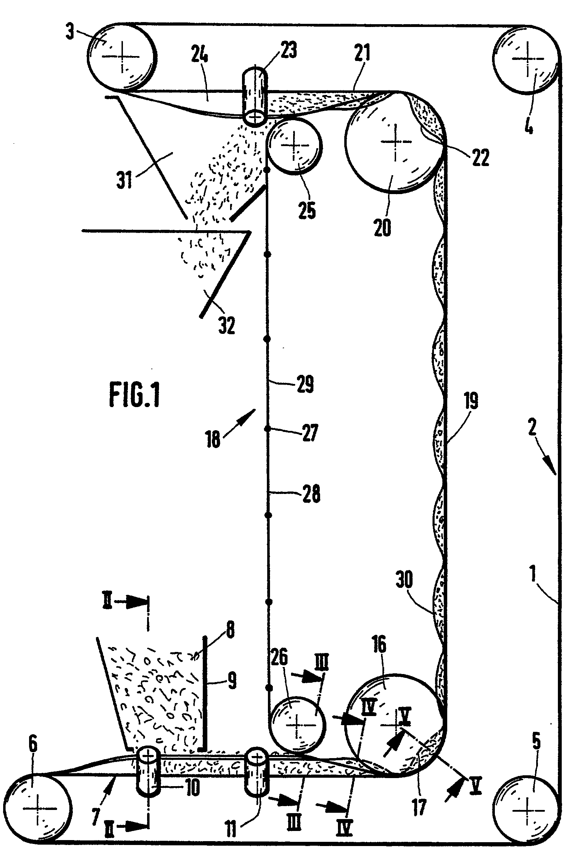

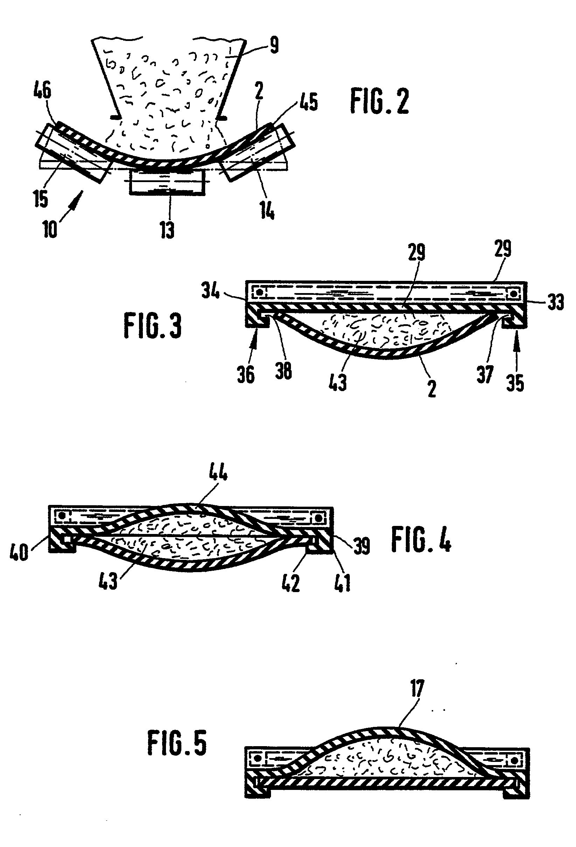

Gemäß der Darstellung der Figur 1 ist ein Förderband längs einer U-förmigen Förderstrecke verlegt. Der Förderbandgurt 2 durchfährt das Untertrum 1 beginnend von der oberen Kehre 3 über eine Bandtragrolle 4 und eine untere Umlenkrolle 5 bis zur unteren Kehre 6. An die untere Kehre 6 schließt sich das fördernde Obertrum 7 an. Die Beladung erfolgt an einer Bandaufgabe 9, die sich unmittelbar an die Kehre 6 anschließt. Das Fördergut besteht gemäß dem dargestellten Ausführungsbeispiel aus Beton 8. Die Aufgabe erfordert zwei Muldenrollensätze 10 bzw. 11, von denen der Muldenrollensatz 10 in Figur 2 wiedergegeben ist. Ein solcher Muldenrollensatz enthält eine horizontale Bandtragrolle 13 und zwei im Winkel dazu angeordnete Bandtragrollen 14 bzw. 15. Der aufliegende Gurt 2 des Obertrums wird unter der Einwirkung des Fördergutes 8 gemuldet und dabei annähernd bogenförmig verformt.

An den letzten Muldenrollensatz 11 schließt sich eine untere Bandunlenktrommel 16 an, welche Aussparungen zur Aufnahme von ausgebeulten Bereichen 17 eines Deckbandgurtes 18 aufweist. Die Bandumlenktrommel 16 lenkt das Obertrum 7 des Förderbandgurtes 2 in die Senkrechte um, so daß diese eine Steilstrecke 19 überwindet. Eine obere Bandumlenktrommel 20 lenkt den Fördergurt 2 in einen horizontalen Abschnitt 21 um und ist wie die untere Bandumlenktrommel 16 mit Aussparungen 22 bei Aufnahme der ausgebeulten Bereiche 17 des Deckbandgurtes versehen. An die Förderbandumlenktrommel 20 schließt sich ein Muldenrollensatz 23 an, auf dem der Gurt 2 infolge seiner Vorspannung erneut wie bei 24 dargestellt, gemuldet wird. Auf den Umlenktrommeln 3 bis 6 ebenso wie auf den Mänteln der Trommeln 16 und 20 wird dagegen der Gurt 2 abgeflacht.

Das Deckband 18 hat zwei eigene Umlenktrommeln 25 bzw. 26. Diese führen zusammen mit den Umlenktrommeln 16 und 20 den Deckbandgurt 29 auf seinem endlosen Umlauf. Der Deckbandgurt hat schematisch bei 28 angedeutete Zugarmierungen, die mit biegesteifen Querarmierungen 27 zusammenwirken. Zwischen den Armierungen bildet der Gurt Ausbeulungen, wie bei 17 schematisch dargestellt. Die Ausbeulungen 17 wirken mit dem flachen Gurt 2 des Förderbandes zusammen und bilden die erwähnten Förderräume 30 aus. An den Bandlängskanten und im Bereich der Querarmierungen 27 sind die Förderräume 17 gegeneinander abgedichtet.

Hinter der Bandtragrolle 25 des Deckbandgurtes 27 liegt der Abwurf in einen Fülltrichter 31, aus dem der das Fördergut bildende Beton wie bei 32 angedeutet, abgezogen wird.

Wie sich aus der Darstellung der Figur 3 ergibt, weist der Deckbandgurt 29 an beiden Längskanten 33, 34 nach außen vorstehende Haken 35, 36 auf. Die Öffnungen 37, 38 stehen sich gegenüber. Gemäß der dargestellten Ausführungsform sind die Haken 35, 36 an jeder Gurtkante 33, 34 in Leisten 39, 40 zusammengefaßt. Das heißt, daß in den Leisten 39, 40 die Haken jeder Bandlängskante 33, 34 eine Baueinheit bilden. Diese Leisten besitzen ein Winkelprofil, an dem sich ein senkrechter Schenkel 41 von einem horizontalen Schenkel 42 unterscheiden läßt. Der senkrechte Schenkel verläuft orthogonal zu dem flachen Gurt 29, während der anschließende Schenkel 42 parallel zu dem flachen Gurt 29 angeordnet ist.

In der Ausführungsform nach Figur 1 wird mit Hilfe der Bandumlenktrommel 26 der Deckbandgurt 29 auf den Förderbandgurt 2 gesteuert, der zuvor über die Aufgabe 9 mit dem Fördergut 8 beladen worden ist. Schließlich liegt der Deckbandgurt 29 gemäß der Darstellung der Figur 3 dem noch gemuldeten Förderbandgurt 2 unmittelbar auf, so daß die Einschlies sung der kleinen Förderguthaufen 43, welche sich in den erwähnten Förderräumen 30 befinden, beginnt. Gleichzeitig beginnt sich der Förderbandgurt 2 zunehmend abzuflachen, was auf der ebenen Auflagefläche beruht, die der Gurt auf der Umlenktrommel 16 findet. Die Abflachung ist an der durch den Schnitt IV-IV dargestellten Stelle weiter fortgeschritten. Unter dem Einfluß der von dem Guthaufen 43 übertragenen Kräfte tritt eine Ausbeulung 44 des Deckbandgurtes ein, die sich schließlich bei vollkommener Abflachung zor Vollendung der Ausbeulung 17 vergrößert.

Beim Ablaufen des Förderbandgurtes von dem letzten Muldenrollensatz 11 werden zunächst die Längskanten 45, 46 des Fördergurtes 2 den Haken 35, 36 genähert, wie die Figur 3 erkennen läßt. Bei fortschreitender Abflachung des Fördergurtes 2 werden die Längskanten 45, 46 schließlich in die Haken eingespurt, wo sie kraftschlüssig festgehalten werden.

An der oberen Umlenktrommel 20 wird dagegen der umgekehrte Vorgang mit dem Muldenrollensatz 23 bewirkt. Hier führt das Auflaufen des Fördergurtes 2 auf den Muldenrollensatz 23 zur erneuten Muldung des Fördergurtes 2 entsprechend der Darstellung der Figur 2 und damit zum Ausspuren der Längskanten 45, 46 aus dem Eingriff der Haken 35, 36.

Durch die beschriebenen Vorgänge werden die Gurtränder auf der Steilstrecke durch den gegenseitigen Zusammenhalt der Gurte 2 und 29 aufeinandergepreßt und zusammengehalten.

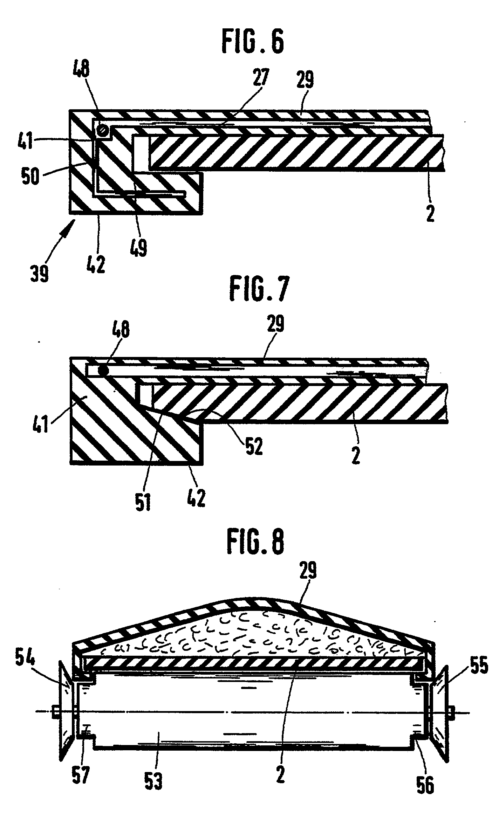

Bei der Ausführungsform nach der Figur 6 sind die Querbewehrungen 27 in den Gurt 29 eingebaut und an ihren Enden, welche Aussparungen für den Formschluß mit den paarweise angeordneten und parallel verlaufenden Zugarmierungen tragen, welche bei 48 in Figur 6 dargestellt sind, abgewinkelt. Die Abwinklungen besitzen einen horizontalen Schenkel 49, welcher dem horizontalen Schenkel 42 der Leiste entspricht. Dieser horizontale Schenkel 49 bildet eine Baueinheit mit einem senkrechten Schenkel 50, der in den ihm entsprechenden senkrechten Schenkel 41 des Hakenprofiles einvulkanisiert ist. Mit dem Winkelprofil läßt sich die Klemmkraft der Leiste 39 bzw. 40 erheblich verstärken.

Demgegenüber verzichtet die Ausführungsform nach Figur 7 auf die verlängerten Enden der Querbewehrung 29, verstärkt aber durch eine ansteigende Schrägfläche 51 des horizontalen Hakenschenkels 42 und eine entsprechende Profilfläche 52 an dem Förder bandgurt 2 die Klemmkraft, wobei gleichzeitig mit Hilfe der Führung durch die Schrägflächen 51 und 52 das Einspuren erleichtert wird.

Die Figur 8 zeigt für die beschriebene Abflachung des Fördergurtes 2 eine eigene Tragrolle 53, welche mit Spurkränzen 54, 55 versehen ist. Die Spurkränze sorgen dafür, daß der Gurt 29 des Deckbandes auf dem Förderbandgurt 2 ausgerichtet ist. An den Enden der geraden Bandtragrolle 53 sind Nuten 56, 57 zur Aufnahme der Haken vorgesehen.

**Patentansprüche**

1. Doppelgurtbandförderer mit einem endlos umlaufenden Förderband, dessen Gurt (2) an einer Bandaufgabe (9) und im Anschluß an eine Steilstrecke (19) auf Muldenrollensätzen (23) abgestützt und auf der Steilstrecke flachgehalten wird, sowie mit einem endlos umlaufenden Deckband (18), dessen Gurt (29) im Fördertrum zur Ausbildung geschlossener Förderräume (30) vorzugsweise zwischen außen liegenden Zugarmierungen (48) und mit diesen zusammenwirkenden, schubsteifen Querarmierungen (27) ausbeulbar ist, wobei die Gurtränder aufeinander gepreßt und die Gurtlängskanten zusammengehalten werden, dadurch gekennzeichnet, daß zum Zusammenhalten der Gurte (2, 29) an beiden Deckbandkanten (33, 34) nach außen vorstehende Haken (35, 36) mit gegenüberliegenden Öffnungen (37, 38) vorgesehen sind, denen sich die Längskanten (45, 46) des Fördergurtes (2) beim Ablaufen von den Muldenrollensätzen (10, 11) nähern bzw. von denen sie sich beim Ablaufen des Fördergurtes (2) auf die Muldenrollensätze (25) entfernen, und daß in Förderrichtung hinter dem letzten Muldenrollensatz (11) der Bandaufgabe (9) wenigstens eine Bandtrag- oder Bandumlenkrolle (16, 53) eingebaut ist, die den aufliegenden Fördergurt (2) abflacht, der dabei mit seinen Längskanten (45, 46) in die Haken (35, 36) eingreift, welche zum Aufeinanderpressen der Gurtränder und zum gegenseitigen Zusammenhalten der Gurte (2, 29) dienen.

2. Doppelgurtbandförderer nach Anspruch 1, dadurch gekennzeichnet, daß die Haken (35, 36) jeder Gurtkante in einer Leiste (39, 40) zusammengefaßt sind, welche ein Winkelprofil (41, 42) mit einem senkrecht zum flachen Gurt (29) und einen anschließenden, parallel zum flachen Gurt (29) verlaufenden Schenkel (42) aufweist.

3. Doppelgurtbandförderer nach einem der Ansprüche 1 oder 2, dadurch gekennzeichnet, daß die Enden der Querarmierungen (28) über die Zugarmierungen (27) verlängert und den Haken entsprechend profiliert sind.

4. Doppelgurtbandförderer nach einem der Ansprüche 1 bis 3, dadurch gekennzeichnet, daß die Hakenschenkel (49) abgeschrägt und die Fördergurtkanten (52) entsprechend profiliert sind.

5. Doppelgurtbandförderer nach einem der Ansprüche 1 bis 4, dadurch gekennzeichnet, daß die zur Abflachung des Förderbandgurtes (2) dienende Bandtragrolle (55) beiderseits mit Spurkränzen (54, 55) und Nuten (56, 57) zur Aufnahme der Haken (35, 36) bei der Abwälzung der Tragrolle (53) auf dem Förderbandgurt (2) vorgesehen sind.

## Claims

1. A double band belt conveyor having an endlessly rotating conveyor belt, whose band (2) is supported on troughed roller sets (23) at a belt feeder (9) and connecting with a vertical stretch (19), and is held flat on the vertical stretch, and having an endlessly rotating cover belt (18), whose band (29) can be buckled in the conveying stretch for the formation of closed conveying chambers (30) preferably between external tensioning reinforcements (48) and cooperating, shear-resistant transverse reinforcements (27), whereby the band edges are pressed together and the longitudinal edges of the band are held together, characterised in that for holding together the bands (2, 29) outwardly projecting hooks (35, 36) with opposing openings (37, 38) are provided on both cover belt edges (33, 34), which the longitudinal edges (45, 46) of the conveying band (2) approach on running off the troughed roller sets (10, 11) or from which they move away on running of the conveyor band (2) onto the troughed roller sets (25), and that, beyond the last troughed roller set (11) of the belt feeder (9) in the conveying direction, at least one belt bearing roller or belt guide roller (16, 53) is provided which flattens the conveyor band (2) lying on it, the longitudinal edges (45, 46) of which thereby engage in the hooks (35, 36) which serve for pressing together the band edges and for mutual holding together of the bands (2, 29).

2. A double band belt conveyor according to claim 1, characterised in that the hooks (35, 36) of each band edge are combined in a strip (39, 40) which has an angle section (41, 42) with a flange (42) running perpendicularly to the flat band (29) and a following flange running parallel to the flat band (29).

3. A double band belt conveyor according to one of claims 1 and 2, characterised in that the ends of the transverse reinforcements (28) are extended over the tensioning reinforcements (27) and the hooks are correspondingly profiled.

4. A double band belt conveyor according to one of claims 1 to 3, characterised in that the hook shanks (49) are chamfered and the conveyor band edges (52) are correspondingly profiled.

5. A double band belt conveyor according to one of claims 1 to 4, characterised in that both sides of the belt bearing rollers (55) serving for flattening of the conveyor belt band (2) are provided with flanges (54, 55) and grooves (56, 57) for taking up the hooks (35, 36) when the bearing roller (53) is rolling on the conveyor belt band (2).

## Revendications

1. Transporteur à deux bandes, comportant une bande de transport sans fin dont la courroie (2) est soutenue par des jeux de rouleaux d'entrée disposés en cuvette (10, 11) à l'endroit d'un dispositif d'alimentation (9) précédant un trajet en pente raide le long duquel l'âme de la bande de transport est maintenue à plat; et une bande de recouvrement sans fin (18), dont la courroie (29) est déformable en poches dans la branche de transport du système, pour constituer des alvéoles de transport fermés (30) qui sont disposés de préférence entre des éléments d'armature latéraux qui travaillent à la traction (48) et des éléments d'armature transversaux (27) résistant à la poussée et qui coopèrent avec les éléments latéraux, des moyens étant prévus pour maintenir les bords des deux courroies appliqués l'un contre l'autre en position d'accolement des deux courroies, caractérisé en ce que, pour maintenir les deux courroies (2, 29) en position accolée, la courroie de recouvrement (29) porte sur ses deux bords (33, 34) des crochets (35, 36), en saillie vers l'extérieur et dont les ouvertures (37, 38) sont disposées en regard l'une de l'autre, le système étant agencé de telle manière que les bords (45, 46) de la bande de transport (2) viennent s'engager dans ces crochets (35, 36) à la sortie des jeux de rouleaux d'entrée en cuvette (10, 11), et que les bords (45, 46) de la bande de transport (2) se dégagent des crochets (35, 36) de la courroie de recouvrement (29) lorsque la bande de transport (2) va passer sur un autre jeu de rouleaux de sortie en cuvette (23), au moins un rouleau porteur (53) ou un rouleau de renvoi (16) étant disposé dans le sens du mouvement en aval du dernier jeu de rouleaux d'entrée en cuvette (11) associé au dispositif d'alimentation (9), pour assurer la mise à plat de la bande de transport (2) qui passe sur ce rouleau porteur ou sur ce rouleau de renvoi, la bande de transport (2) ayant ainsi engagé ses deux bords longitudinaux (45, 46) dans les crochets (35, 36) de la courroie de recouvrement, qui servent à maintenir appliquées l'une contre l'autre les zones de bordure des deux courroies (2, 29) et à maintenir celles-ci en position d'accolement.

2. Transporteur à deux bandes selon la revendication 1, raractérisé en ce que les crochets (35, 36) de chaque bord de la bande de recouvrement sont réunis dans une pièce de lisière (39, 40) qui comporte un profilé en forme de cornière (41, 42) ayant une aile (41) perpendiculaire à la courroie plate (29) de la bande de recouvrement et une aile adjacente (42) parallèle à cette courroie plate (29).

3. Transporteur à deux bandes selon l'une des revendications 1 et 2, caractérisé en ce que les extrémités dès éléments transversaux (27) de l'armature de la bande de recouvrement (29) sont prolongées au-delà des éléments longitudinaux (28) de l'armature qui travaillent en traction, et présentent une forme qui correspond au profil des crochets de la bande de recouvrement.

4. Transporteur à deux bandes selon l'une des revendications 1 à 3, caractérisé en ce que la branche extrême (49) de chacun des crochets présente une face interne oblique adaptée à coopérer avec une face oblique correspondante de chaque bord (52) de la bande de transport (2).

5. Transporteur à deux bandes selon l'une des revendications 1 à 4, caractérisé en ce que les rouleaux porteurs (53) destinés à assurer la mise à plat de la bande de transport (2) comportent de chaque côté des couronnes de maintien (54, 55), disposées suivant un écartement précis, et des gorges en retrait (56, 57) pour le passage des crochets (35, 36) engagés en saillie sur la bande de transport (2) soutenue par chaque rouleau porteur (53).

FIG.1

FIG.2

FIG.3

FIG.4

FIG.5

## FIG.6

## FIG.7

## FIG.8